**Europäisches Patentamt**

**European Patent Office**

**Office européen des brevets**

(19)

(11) Publication number:

**0 205 797**
**A1**

## (12) EUROPEAN PATENT APPLICATION

(21) Application number: 86105209.0

(22) Date of filing: 15.04.86

(51) Int. Cl.⁴: **B 60 G 21/08**

(30) Priority: 03.05.85 IL 75084

(43) Date of publication of application: 30.12.86
Bulletin 86/52

(84) Designated Contracting States: **BE DE FR GB IT NL SE**

(71) Applicant: **Matos, Dov, 32 Mashabim Street, Hod Hasharon (IL)**

(72) Inventor: **Matos, Dov, 32 Mashabim Street, Hod Hasharon (IL)**

(74) Representative: **Schmidt-Evers, Jürgen, Dipl.-Ing. et al, Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10, D-8000 München 22 (DE)**

(54) **Safety device for use on mechanized vehicles.**

(57) To prevent a car from turning over when taking a curve at high speed, the safety means comprise a gyroscope (1) which is enclosed in a low pressure cell (2). The cell (2) is connected to a suction pump (9) which maintains the low pressure in the cell (2). The gyroscope (1) is connected to two electrical contacts (12, 13) opening or closing a circuit in accordance with the movements of the vehicle (15).

## SAFETY DEVICE FOR USE ON MECHANIZED VEHICLES

This invention relates to safety means intended to prevent the turning over of a car which had taken a curve while travelling at an excessive speed. An inexperienced driver is likely to enter a curve at great speed with the result that centrifugal force acting on the car causes the vehicle to deviate in the direction which is opposite to that of the curve. Such an occurence usually brings about overturning of the car due to a shift of the centre of gravity of the travelling mass.

The idea underlying the arrangement of this invention resides in balancing the forces which move the car in the curve against the centrifugal forces acting on it. A correction of the dirver's fault is obtained by a gyroscope which actuates a rectifying means in a controlled way and in proper response to the degree of fault.

Accordingly, the inventive arrangement comprises a gyroscope which operates in a low pressure cell, which latter is connected to a motor driven suction pump or an electrically actuated pump for creation of sub pressure. To the centre of rotation of the horizontal ring of the gyroscope there is affixed a shaft which transmits the movement of the ring - via two arms - to two electrical contacts which close or open a circuit in response to the movement of the said ring, which latter is a consequence of the vehicle's movement and action of the gyroscope.

The invention will now be described in detail with reference to the annexed drawings, in which:

Fig. 1 is a schematical view of the gyroscope device employed, while

Fig. 2 is a scheme of an hydraulic arrangement

Fig. 3 is a scheme of the electricl installation operating the arrangement.

Figs. 4-5 illustrate schematically the position of a vehicle prior to and during travelling in a curve.

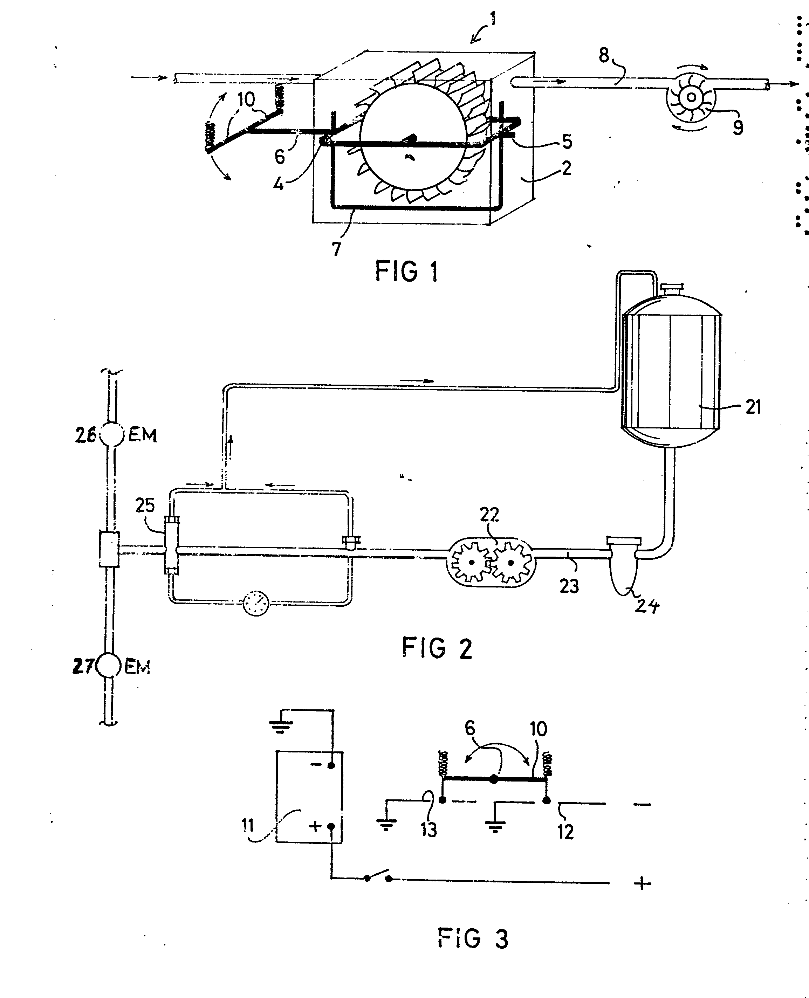

Turning first to Fig. 1, there is shown the gyroscope, designated as a whole by the numeral 1 and being set in a sub pressure cell 2, such that the axis of rotor 3 would be normal to the longitudinal axis of the vehicle. The rotor axis 3 extends within a horizontal ring member 4 which is swingable about two codirectional shafts 5,6. The precession movement of the gyroscope is about these shafts 5,6. The shafts 5,6 are journalled in a frame 7 affixed to cell 2.

The cell 2 is connected via a conduit 8 to a suction pump 9. The rotor of the gyroscope operates in a vertical plane. A change in the direction of travel of the vehicle causes an external force to act on the rotor, due to which the precession movement about shafts 5,6 tkaes place. The consequent movement is transmitted to arms 10 which in turn close or open one of two contacts 12 or 13 (see Fig. 3) as will become clear later.

The closure of one of the two circuits sets the arrangement in action, operating an electrical or pneumatic or hydraulic means via a solenoid 26 ot 27.  As an example is shown in Fig. 2 an hydraulic means which comprises an oil container 21, an hydraulic pump 22 which operates under a pressure corresponding to the size and weight of the vehicle feeding conduit 23, a filter 24 and pressure directing valve 25 and solenoids 26, 27.

The arrangement operates in the following manner:

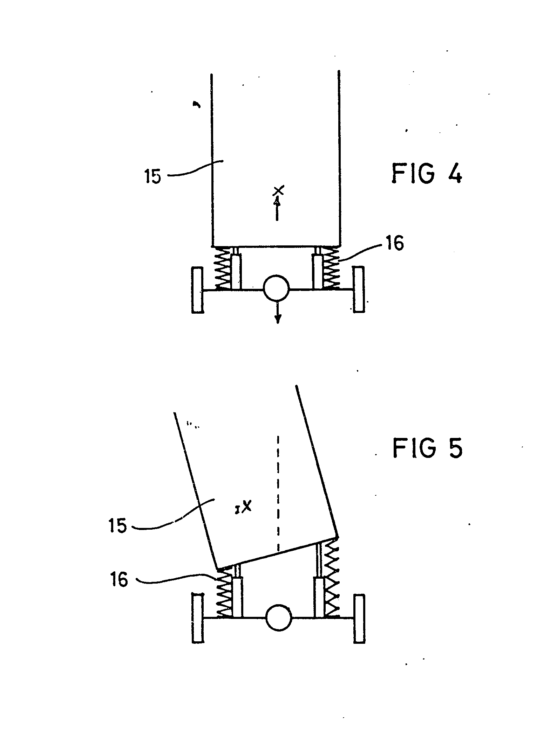

The centre of gravity is positioned in a vehicle 15 at X (fig. 4) when entering a curve at excessive speed, forces acting on the vehicle cause it to tilt (fig. 5) and to shift the centre of gravity to $X_1$.  This results in actuation of the gyroscpẞe which in turn acts on arm 10 to close the contact 12 or 13.  This causes one of the solenoids 26, 27 to become operative and to cause oil to flow to cylinder 16 raising the body of the vehicle.  Thus, the centre of gravity reverts to point X and neutralizes the action of the centrifugal force - at least partially - activating centripetal forces.

The speed at which the correcting forces act would depend on the degree  of fault, i.e., action to a higher degree  in response to greater need.  The cylinders 16 would be positioned in accordance with the build of the vehicle, but generally it would be positioned intermediate the axle of a rear wheel and the body of the vehicle.

As already stated, in lieu of hydraulic means pneumatic ones could be used, employing a compressor.

CLAIMS

1. A safety device to be installed in mechanized vehicles (15) for righting the vehicle (15) to prevent its turning over due to entering a curve at excessive speed, characterized in a gyroscope (1) which operates in a low pressure cell (2), which latter is connected to a motor driven suction pump (9) or an electrically actuated pump for creation of sub pressure, there being affixed to the centre of rotation of the horizontal ring (4) of the gyroscope (1) a shaft (6) which transmits the movement of the ring (4) - via two arms (10) - to two electrical contacts (12, 13) which close or open a circuit in response to the movement of the said ring (4), which latter is a consequence of the vehicle's movement and actions of the gyroscope (1), the circuit acting on a valve means (26, 27) to become operative and directing a flow of pressure fluid to a pneumatic or hydraulic cylinder (16), the piston of which being extended rights the vehicle (15).

2. A safety device according to claim 1, characterized in that said circuit comprises an electric means acting on a solenoid (26, 27).

3. A safety device according to claim 1, characterized in that said circuit comprises a pneumatic or hydraulic means.

4. Vehicles, characterized in being equipped with the device claimed in any one of the foregoing claims.

0205797

1/2

FIG 1

FIG 2

FIG 3

FIG 4

15

16

FIG 5

15

16

0205797

# 0205797

European Patent Office

**EUROPEAN SEARCH REPORT**

Application number

EP  86 10 5209

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 250 137  (DELSUC) <br> * column  2, lines 21-56; column 3, lines 22-47; figures 1-4 * | 1-4 | B 60 G   21/08 |
| A | FR-A-1 226 661  (DELSUC) <br> * whole document * | 1-4 | |
| A | US-A-3 881 736  (WILFERT) <br> * claims 1, 2, 4; figure 2 * | 1-4 | |

| | TECHNICAL FIELDS SEARCHED (Int. Cl.4) |
|---|---|
| | B 60 G   21/00 <br> B 60 G   17/00 |

The present search report has been drawn up for all claims

| Place of search | Date of completion of the search | Examiner |
|---|---|---|
| BERLIN | 16-08-1986 | KRIEGER P O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82